# EUROPÄISCHE PATENTSCHRIFT

(11) **EP 0 542 071 B1**
(45) Veröffentlichungstag und Bekanntmachung des Hinweises auf die Patenterteilung: **20.09.1995**
(21) Anmeldenummer: 92118675.5
(22) Anmeldetag: 31.10.1992
(51) Int. Cl.: B27K 3/52

(54) **Holzschutzmittel**
Wood preservative
Agent préservatif du bois

(30) Priorität: 15.11.1991 DE 4137621
(43) Veröffentlichungstag der Anmeldung: 19.05.1993
(73) Patentinhaber: Dr. Wolman GmbH, D-76547 Sinzheim (DE)
(72) Erfinder: Goettsche, Reiner, Dr., W-7570 Baden-Baden 19 (DE); Borck, Hans-Volker, W-7570 Baden-Baden (DE); Reuther, Wolfgang, Dr., W-6900 Heidelberg (DE)
(74) Vertreter: Zimmermann, Kornelia

(56) Entgegenhaltungen:
- EP-A- 0 238 051
- EP-A- 0 270 848
- EP-A- 0 431 315
- DE-A- 3 743 821
- DE-A- 3 835 370

## Beschreibung

Holzschutzmittel auf der Basis anorganischer Kupferverbindungen mit Alkanolaminen als Komplexbildner sind bekannt (EP 89 958). Die Wirksamkeit dieser Mittel gegenüber holzzerstörenden Basidiomyceten reicht trotz hoher Kupfergehalte im Vergleich zu bekannten kupfer- und chromathaltigen Salzen mit vergleichbarem Kupfergehalt nicht aus.

Holzschutzmittel auf Basis von Verbindungen des N-Cyclohexyldiazeniumdioxyd (HDO) sind bekannt. Formulierungen mit dem Kupfersalz Cu-HDO und komplexbildenden Aminen sind bekannt (DE 102 474, DE 2 410 603). Es zeigte sich jedoch, daß das Komplexbildungsvermögen von Alkanolaminen in Wasser nicht ausreicht, um mit Cu-HDO löst sich zwar gut in Alkanolaminen, entsprechende verdünnte Anwendungslösungen dieser Konzentrate in Wasser sind jedoch nicht stabil genug. Das Cu-HDO fällt zum großen Teil spontan oder nach kurzer Zeit aus der wäßrigen Lösung aus. Aus DE-A-3 835 370 und EP-A-0 431 315 sind weiter Holzschutzmittel auf der Basis Kupfer-di (N-organodiazeniumdioxyd), eines Polyamins und einer komplexbildenden Carbonsäure bzw. eines Fettamins bekannt, die jedoch auch keine zufriedenstellende Wirksamkeit gegenüber holzzerstörenden Organismen aufweisen.

Es wurde jetzt gefunden, daß Holzschutzmittel auf der Basis einer Mischung von Alkanolamin und dem Kupfersalz eines N-Organodiazeniumdioxids, enthaltend zusätzlich eine Kupferverbindung in einer solchen Menge, daß das Gewichtsverhältnis Kupfer im Kupfersalz des N-Organodiazeniumdioxyds zu Kupfer in der Kupferverbindung 1:3 bis 1:mehr als 3 beträgt, stabile wässerige Lösungen bilden und eine sehr gute Wirksamkeit gegenüber Basidiomyceten und Termiten besitzen; gleichzeitig wird eine ausreichend tiefe Eindringung der Mischung in das Holz, z.B. bei der Anwendung im Kesseldruckverfahren erreicht. Die zusätzliche Verwendung von Arylcarbonsäuren, Cycloalkylcarbonsäuren oder aliphatischen C₅-C₂₀-Mono- oder Dicarbonsäuren oder ihren Salzen, z.B. den entsprechenden Amin-, Alkali- oder Kupfersalzen in der Mischung verbessert die Stabilität der wäßrigen Lösungen.

Das Gewichtsverhältnis Cu in Cu-HDO zu CU in Cu-Verbindung kann in weiten Grenzen schwanken, beispielsweise 1:5 bis 1:15, inbesondere 1:10.

Die Kupferverbindungen (mit oder ohne Kristallwasser) können als wasserlösliche oder wasserunlösliche Verbindungen eingesetzt werden, z.B. Kupfersulfat, Kupferacetat, Kupferhydroxid, Kupferoxid, Kupferborat, Kupferfluorid, Kupferhydroxidcarbonat (basisches Kupfercarbonat).

Ein Alkanolamin ist insbesondere Monoethanolamin; der Einsatz von anderen Alkanolaminen, z.B. Isopropanolamin, Diethanolamin, Triethanolamin, Methylethanolamin ist möglich. Polyamine, wie z. B. 1,1-, 1,2- Diaminoethanol können verwendet werden; ihre Menge sollte jedoch gering gehalten werden, um die Kupferauswaschung nicht zu erhöhen. Monoethanolamin wird bevorzugt.

Hierbei wird die Menge der zugesetzten Alkanolamine vorteilhaft so bemessen, da sich in der verdünnten wässerigen Imprägnierlösung ein pH-Wert von 7 oder mehr, vorzugsweise 8,5 bis 11,0 einstellt. Die Menge der Amine soll zur Komplexbildung des Kupfers ausreichen (1-g-Atom Kupfer benötigt ca. 4 mol Äquivalente Amin).

N-Organodiazeniumdioxy-Verbindungen sind z.B. die N-Cyclohexyl-, N-C₄-C₁₀-Alkyl-, insbesondere N-C₅-C₈-Alkyl-, N-Aryl-, insbesondere N-Phenyl-diazeniumdioxy-Verbindungen und ihre Mischungen. Metallsalze sind z.B. die Kupfersalze und ihre Mischungen. Solche Verbindungen sind z.B. Bis-(N-Cyclohexyldiazeniumdioxy)-Kupfer, Bis(N-Alkyldiazeniumdioxy)-Kupfer, Bis-(N-Aryldiazeniumdioxy)-Kupfer. Es können aber auch die Alkali-, Anmonium- oder Aminsalze des N-Organodiazeniumdioxyds in Mischung mit Kupferverbindungen verwendet werden, so daß sich in wäßriger Lösung durch doppelte Umsetzung die Kupfersalze des N-Organodiazeniumdioxyds bilden.

Aliphatische Carbonsäuren oder Phosphonsäuren können zur Verbesserung der Homogenität der Konzentrate, der Stabilität der Lösungen und zur Einstellung des gewünschten pH-Wertes zugesetzt werden. Solche Säuren sind z.B. Hexansäure, Heptansäuren, verzweigte Carbonsäuren, wie z.B. Ethylhexansäure, Isooctansäure; Neocarbonsäuren, aliphatische Dicarbonsäuren, wie z.B. Sebacinsäure, Dodecandicarbonsäure, Cycloalkylcarbonsäuren, wie z.B. Cyclohexansäure, Arylcarbonsäuren, wie z.B. Benzoesäure, 3- oder 4-Hydroxybenzoesäure, Phosphonsäuren, z.B. Phosphonopropionsäure.

Bei Verwendung der obengenannten Säuren ist es teilweise von Vorteil, durch Zusatz von komplexbildenden, polymeren Stickstoffverbindungen die Holzschutzmitteleindringung bei großtechnischen Verfahren zu verbessern. Komplexbildende, polymere Stickstoffverbindungen sind z.B. Polyethylenimine, Polyamidoamine (Kondensationsprodukte von Polyaminen mit Adipinsäure), Kondensationsprodukte z.B. auf Basis Diethylentriamin/Triethanolamin und/oder Diethanolamin/Diethylentriamin.

Polyethylenimine (PEI) sind bekannt und entstehen durch Polymerisation von 1,2-Ethylenimin. In ihnen liegt der Stickstoff primär (Endgruppe), sekundär und tertiär (Verzweigung) vor. Geeignet sind Polyethylenimine mit n größer als 10; sehr gute Ergebnisse wurden erzielt bei der Verwendung von PEI mit einem Polymerisationsgrad n zwischen 50 und 1000.

Polyamidoamine entstehen beispielsweise durch Umsetzung von Diethylentriamin mit Adipinsäure bei 150 bis 200°C.

Weitere Kondensationsprodukte entstehen beispielsweise durch Erhitzen von Diethanolamin oder Triethanolamin auf 200 bis 220°C in Gegenwart von Phosphonsäure (H₃PO₃).

Die Holzschutzmittel können ggf. weitere Verbindungen, z.B. Verbindungen mit einem fungiziden Anion wie beispielsweise eine Borverbindungen (z.B. Alkaliborat, Aminborat, Borsäure, Borsäureester), Fluoride (z.B. Kaliumfluorid und/oder Salze der Fluoroborsäure und/oder fluorophosphorsäure und/oder Difluorophosphorsäure), enthalten.

Durch den Zusatz weiterer Wirkstoffe kann die Wirkungsbreite der erfindungsgemäßen Holzschutzmittel ggf. verbessert werden. Geeignete Verbindungen sind z.B. Organzozinnverbindungen, besonders Tributyl(TBT)zinnverbindungen, Isothiazolinverbindungen der folgenden Formel 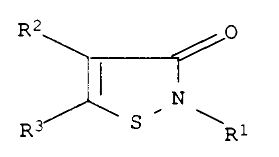
- R¹: ist Wasserstoff, ein Alkyl-, Alkenyl-, Alkinylrest mit 1 bis 18 Kohlenstoffatomen, Cycloalkyrest mit einem C₃- bis C₆-Ring und mit bis zu 12 Kohlenstoffatomen, einem Aralkyl- oder Arylrest mit bis zu 19 Kohlenstoffatomen
- R², R³: unabhängig voneinander Hydrogen-, Halogen- oder C₁- bis C₄-Alkylrest bzw. R² und R³ Teil eines Aromatenrestes.

Auch ein Zusatz weiterer Fungizide oder Insektizide ist möglich, teilweise in emulgierter Form, wie
1-(2-(2,4-Dichlorphenyl)-methyl-1,3-dioxolan-2-ylmethyl)-1H-1,2,4-triazol
1-(2-(2,4-Dichlorphenyl)-1,3-dioxolan-2-ylmethyl)-1H-1,2,4-triazol (Azaconazol)
1-(2-(2,4-Dichlorphenyl)-4-ethyl-1,3-dioxolan-2-ylmethyl)-1H-1,2,4-triazol
1-(2-(2,4-Dichlorphenyl)-4-propyl-1,3-dioxolan-2-ylmethyl)-1H-1,2,4-triazol (Propiconazol)
1-(2-(2,4-Dichlorphenyl)-4-phenyl-1,3-dioxolan-2-ylmethyl)-1H-1,2,4-triazol
a-tert.-Butyl-a-(p-chlorphenylethyl)-H-1,2,4-triazol-1-ethanol (Tebuconazol).

Zusätzlich können z.B. folgende Verbindungen zugesetzt werden:
Quatäre Ammoniumverbindungen, z.B. der allgemeinen Formel R¹R²R³R⁴N⁺Z⁻, wobei
- R¹: einen Alkylrest mit 8 bis 20 Kohlenstoffatomen, insbesondere eine Allkylrest mit 12 bis 20 Kohlenstoffatomen oder einen Benuzylrest bedeutet, der ggf. durch C₁- bis C₂₀-Alkyl oder Halogen substitutiert ist,
- R²: C₁- bis C₆-Alkyl, C₃- bis C₉-Alkoxyalkyl, Polymeres Ethylenoxid (EO) oder Propylenoxid (PO) mit EO bzw. PO n = 2 bis 50,
- R³: C₁- bis C₆-Alkyl, C₃- bis C₄-Alkoxy, Polymeres Ethylenoxid (EO) oder Prophylenoxid (PO) mit EO bzw. PO n = 2 bis 50,
- R⁴: C₁- bis C₂₀- Alkyl
bedeutet oder je zwei der Reste R¹ bis R⁴ zusammen mit dem Stickstoffatom einen heterocyclischen Rest bilden, der 4 bis 5 C-Atome und eine, zwei oder drei Doppelbindungen enthält, wobei die Kohlenstoffatome gegebenenfalls durch C₁- bis C₄-Alkyl oder Halogen substituiert sind und Z einen Säurerest, z.B. Halogenid, bedeutet.

Phosphoniumverbindungen der Formel

R¹₃R²P+Y⁻

in der
- R¹: einen Alkylrest mit 1 bis 6 Kohlenstoffatomen, einen Hydroxylalkylrest mit 1 bis 6 Kohlenstoffatomen oder einen Phenylrest,
- R²: einen Alkylrest mit 8 bis 18 Kohlenstoffatomen und
- y: einen Säurerest, insbesondere ein Halogenidanion, bedeutet,
die Reste R¹ und R² sind vorzugsweise geradkettig.

Beispiele für derartige Phosphoniumverbindungen sind Trimethyl-n-dodecyl-phosphoniumchlorid, Triethyl-n-decylphosphoniumbromid, Tri-n-propyl-n-tetradecylphosphoniumchlorid, Trimethylol-n-hexadecylphosphoniumchlorid, Tri-n-butyl-n-tetra-decylphosphoniumchlorid, Tri-n-butyl-n-dodecylphosphoniumbromid, Tri-n-butyl-n-decylphosphoniumchlorid, Tri-n-butyl-n-hexadecylphosphoniumbromid, Tri-n-hexyl-n-decylphosphoniumchlorid, Triphenyl-n-dodecylphosphonium-chlorid, Triphenyl-n-tetradecylphosponiumbromid, Triphenyl-n-octadecylphosphoniumchlorid.

Ferner können zugesetzt werden:
N-Tridecyl-2,6-dimethylmorpholin (Tridemorph) und/oder 4-(3-para-tertiär-butylphenyl)2-methyl-propyl-2,6-cis-dimethylmorpholin (Fenpropimorph) und/oder
chlorierte Phenole, Tetrachlorisophthalsäure-dinitril
N-Cyclohexyl-N-methoxy-2,5-dimethyl-furan-3-carbonsäureamid
N-Dimethyl-N'-phenyl-(N-fluormethylthio)sulfamid
N,N-Dimethyl-N'-toluyl-(N-fluormethylthio)sulfamid
Benzimidazol-2-carbaminsäure-methylester
2-Thiocyanomethyl-thiobenzothiazol
2-Todbenzoesäureanilid
1-(1',2',4'-Triazolyl-1')-(1-(14'-chlorphenoxy)-3,3-dimethylbutan-2-on
1-(1',2',4'-Triazolyl-1')-(1-(4'-chlorphenoxy)-3,3-dimethyl-butan-2-ol
Hexachlorcyclohexan
0,0,Diethyl-dithio-phosphoryl-methyl-6-chlorbenoxazolon
2-(1,3-Thiazol-4yl)-benzimidazol
N-Trichlormethylthio-3,6,7,8-tetrahydrophthalimid
N-(1,1,2,2-Tetrachlorethylthio)-3,6,7,8-tetrahydrophthalimid
N-Trichlormethylthiophthalimid
3-Iodo-2prophylbutylcarbamat
0,0-Dimethyl-S-(2-methylamino-2-oxoethyl)-dithiophosphat
0,0-Dimethyl-0-(3,5,6-trichlor-2-pyridyl)-thiophosphat
0,0-Dimethyl-S-(N-phthalimido)-methyldithiophosphat
0,0-Diethyl-O-(a-cyanbenzyliden-amino)thiophosphat
6,7,8,9,10-Hexachlor,
1,5,5a,6,9,9a-hexahydro-6,9-methano-2,3,4-benzoe-dioxothiepien-3-oxid
(4-Ethoxyphenyl)-(dimethyl)-(3-(4-fluoro-3-phenoxy-phenyl)-propyl-silane
2-sek.-Butyl-phenyl-N-methylcarbamat
2-1-Propoxyphenyl-N-methyl-carbamat
N-Methyl-1-naphthyl-carbamat
Norbonen-dimethanohexa-chlorcyclosulfit
1-(4-Chlorphenyl)-3-(2,6-di-fluorbenzoyl)-harnstoff
synthetische Pyrethroide, wie
(+)-3-(2,2-Dichlorvinyl-2,2-dimethyl)-cyclopropan-1-carbonsäure-3-phenoxy-benzylester
3-(2,2-Dichlorvinyl-2,2-dimethyl)-cyclopropan-1-carbonsäure-a-Cyano-3,3-phenoxybenzylester
3-(2,2-Dibromvinyl-2,2-dimethyl)-a-cyano-m-phenoxybenzyl-1R,3R)-cyclopropan-carboxylat(Deltamethrin)
a-Cyano-3-phenoxybenzyl-isopropyl-2,4-chlorphenylacetat.

Die wasserverdünnbaren Holzschutzmittel enthalten - in konzentrierter Form - das Kupfer berechnet als Metall im allgemeinen, z.B. in einer Menge von1,0 bis 15,0 % (Gewichtsprozent).

Geeignete Konzentrate bestehen z.B. aus
2,50 bis 45,0 % insbesondere 10 bis 20 % Kupferverbindungen
10,00 bis 50,0 % insbesondere 30 bis 50 % Alkanolamin
1,00 bis 12,5 % insbesondere 2 bis 10 % Bis-(N-Organodiazeniumdioxy)-Kupfer
0 bis 40,0 % insbesondere 5 bis 15 % Verbindung mit einem fungiziden anorganischen oder organischen Anion
0 bis 30,0 % insbesondere 5 bis 25 % einer aliphatischen Mono- oder Dicarbonsäure und/oder
Cycloalkylcarbonsäure und/oder Cycloarylcarbonsäure oder Phosphonsäure
0 bis 10,0 % insbesondere 2 bis 8 % einer komplexbildenden, polymeren Stickstoffverbindung,
wobei die Summe jeweils 100 Gew.% ergibt sowie ggf. untergeordnete Mengen an anderen Bestandteilen, wie z.B. Ammoniak, Korrosionsinhibitoren, komplexbildenden säuren (z.B. Nitrilotriessigsäure, Ethylendiamintetraessigsäure bei Verwendung von Wasser mit höheren Härtegraden) und erforderlichenfalls Wasser, dessen Anteil jedoch im allgemeinen gering gehalten werden kann und das im wesentlichen der Handhabung dient.

Die N-Organodiazeniumdioxy-Verbindungen sind dabei maximal in einer solchen Menge in der Mischung enthalten, daß nicht mehr als 25 Gew.% des Gesamtkupfers zu Bis-(N-Organodiazeniumdioxy)-Kupfer umgesetzt werden kann oder als solches in der Mischung enthalten ist. Das Gewichtsverhältnis Kupfer in Form von N-Organodiazeniumdioxy-Salz zu Kupfer in Form einer Kupferverbindung beträgt also berechnet als Kupfermetall 1:3 bis 1:mehr als 3.

Die Erfindung erstreckt sich jedoch neben den Holzschutzmitteln (Konzentrate) gleichermaßen auch auf die durch Verdünnung der Konzentrate mit Wasser herstellbaren Imprägnierlösungen entsprechend geringerer Einzelkonzentration. Die Anwendungskonzentration betrgt z.B. 0,01 bis 2,50 Gew.% Kupfer, berechnet als Metall, in der wässerigen Imprägnierlösung, je nach Art der Imprägnierung und des Gefährungsgrades des zu imprägnierenden Holzes.

Für den Fall, daß eine komplexbildende polymere Stickstoffverbindung zu der Mischung zugesetzt wird, wird diese nur in untergeordneten Mengen zugesetzt, z.B. in einem Gewichtsverhältnis Polyamin zu Alkanolamin wie 1:5 bis 1:mehr als 5.

Durch Auflösen der Kupferverbindungen, ggf. unter Wärmezufuhr, in den Alkanolaminen, ggf. unter Säure- oder Wasserzugabe entstehen hochkonzentrierte Pasten, flüssige Konzentrate oder auch Zwei-Phasen-Mischungen, die nach dem Verdünnen mit Wasser zum Imprägnieren von Holz verwendet werden können. Sie ergeben auch bei hoher Konzentration in Wasser eine klare Flüssigkeit.

Die Anwendung der Imprägnierlösung zum Schutz von Holz kann durch handwerkliche Verfahren wie Sprühen, Streichen, Tauchen, Trogtränken oder durch großtechnische Verfahren wie Kesseldruckverfahren, Wechseldruckverfahren, Doppelvakuumverfahren erfolgen. Unter "Holz" sind sowohl massives Holz als auch Holzwerkstoffe wie Spanplatten, Sperrholz zu verstehen; hier kann ggf. das Holzschutzmittel auch im Leimuntermischverfahren bei der Herstellung der Holzwerkstoffe eingebracht werden.

Die Kupferfixierung der erfindungsgemäßen Holzschutzmittel im Holz ist hoch, bei Einsatz für großtechnische Verfahren liegt sie bei mehr als 90 %.

Die Konzentrate oder Lösungen können durch wasserunlösliche oder in Wasser emulgierbare Farbstoffe und/oder Pigmentpräparationen eingefärbt werden. Eine Zugabe von Wachs-, Paraffin- und/oder Acrylatdispersionen zur Erzielung einer wasserabweisenden Wirkung oder Verbesserung der Fixierung ist möglich.

Die Konzentrate können ggf. auch in bindemittelenthaltende wasserverdünnbare Systeme (Grundierungen, Lasuren) eingearbeitet werden.

Die folgenden Beispiele erläutern die Erfindung.

Bestimmung der Wirkung gegen holzzerstörende Pilze.

Das Verfahren dient zur Bestimmung der vorbeugenden Wirkung von Holzschutzmitteln gegen holzzerstörende Pilze.

Gleichartige, bei 103°C bis zur Gewichtskonstanz getrocknete Kiefernsplintholzklötzchen (5 x 2,5 x 1,5 cm) werden mit definierten Mengen des zu prüfenden Holzschutzmittels vollgetränkt, nach einer Fixierzeit von 4 Wochen mit Wasser ausgewaschen (Auswaschung der Wirkstoffmischung aus dem Holz) und in Glasschalen dem Angriff von Kulturen holzzerstörender Pilze ausgesetzt. Als Nährboden für die Pilze dient Malzager (enthaltend 4 % Malzextrakt). Die durch den Pilzbefall bewirkte Zerstörung des Holzes wird durch den Gewichtsverlust der Probehölzer erfaßt; ein Gewichtsverlust von 3 % und mehr wird als Holzzerstörung gewertet.

Ein Teil dieser imprägnierten, nach Fixierung ausgewaschenen Kiefernsplintholzklötzchen wurde gleichzeitig zur Überprüfung der Wirksamkeit gegen Termiten verwendet.

Der Nachweis der Wirksamkeit gegen Termiten erfolgte mit der aggressiven Termitenart Heterotermes indicola, welche ein aggressiveres Verhalten als die normalerweise zur Prüfung verwendeten Termitenarten zeigt.

Nach Auswaschung und Abtrocknung wurden die imprägnierten Prüfklötzchen in ein Prüfgefäß gelegt. Zur Prüfung wurden 200 Tiere abgezählt und in das Prüfgefäß gesetzt. Jeweils im Abstand von 7 Tagen wurde die Aktivität der Termiten visuell geprüft. Bei nicht mehr vorhandener Aktivität wurden die Klötzchen aus dem Prüfgefäß herausgenommen und beurteilt und die Anzahl der überlebenden Tiere ermittelt. Bei noch vorhandener Aktivität der Tiere blieben die Klötzchen noch einmal 6 Wochen im Prüfgefäß, danach wurde der Angriff durch die Termiten visuell beurteilt.

Unabhängig hiervon wurde die Stabilität der anwendungsfertigen verdünnten wäßrigen Lösung des Holzschutzmittels bei 20°C über eine Standdauer von 14 Tagen geprüft.

### Vergleichsbeispiel A (nicht erfindungsgemäß)

50 % Cu-HDO
50 % Monoethanolamin
Bei Verdünnung mit Wasser auf Anwendungskonzentrationen von 0,5 - 25 % starke Ausfällungen von Cu-HDO, entsprechende Lösungen können nicht eingesetzt werden.

### Vergleichsbeispiel B (nicht erfindungsgemäß)

20 % Cu(OH)₂CuCO₃
45 % Monoethanolamin
10 % Borsäure
25 % Wasser
Anwndungskonzentrationen von 4 % in Wasser (4 Teile Konzentrat und 96 Teile Wasser).
Pilzprüfung mittlere Schutzmittelaufnahme (Konzentrat): 29,5 kg/m³).
Die Prüfklötzchen werden von den Prüfpilzen Coniophora puteana und Poria placenta stark angegriffen, die Gewichtsverluste nach Pilzprüfung liegen bei über 20 %.
- Termitenprüfung:: mittlere Schutzmittelaufnahme (Konzentrat): 29,2 kg/m³
- Prüfzeitraum:: 6 Wochen
- Angriff:: Klötzchen befressen
- überlebende Tiere:: mehr als 100.

### Vergleichsbeispiel C (nicht erfindungsgemäß)

17,5 % Cu(OH)₂ CuCO₃
42,0 % Monoethanolamin
30,0 % Borsäure
10,5 % Wasser
Anwendungskonzentration 4 % in Wasser.
Pilzprüfung mittlere Schutzmittelaufnahme (Konzentrat): 29,0 kg/m³
Die Prufklötzchen werden von den Prüfpilzen Coniophora puteana und Poria placenta stark angegriffen, die Gewichtsverluste nach Pilzprüfung liegen bei über 20 %.
- Termitenprüfung:: (mittlere Schutzmittelaufnahme (Konzentrat): 29,4 kg/m³
- Prüfzeitraum:: 6 Wochen
- Angriff:: Klötzchen befressen
- überlebende Tiere:: ca. 100

### Beispiel 1 (erfindungsgemäß)

16,0 % Cu(OH)₂ CuCO₃
36,0 % Monoethanolamin
5,0 % Polyethylenimin n = ca. 100
20,0 % Benzoesäure
7,5 % Borsäure
4,5 % K-HDO (Kaliumsalz des HDO)
11,0 % Wasser
Gewichtsverhältnis Cu-HDO zu Cu-Verbindung berechnet als Kupfermetall 1:11
Anwendungskonzentration: 2,5 % in Wasser
Stabilität: Die Lösung in Wasser ist stabil.
Pilzprüfung: mittlere Schutzmittelaufnahme 18,0 kg/m³
Die Prüfklötzchen werden durch die Prüfpilze Coniophora puteana und Poria placenta nicht angegriffen.
- Termitenprüfung:: mittlere Schutzmittelaufnahme 18,1 kg/m³
- Prüfzeitraum:: 4 Wochen
- Angriff:: eine kleine Nagespur
- überlebende Tiere:: 0

### Beispiel 2

17,5 % Cu (OH)₂ CuCO₃
40,0 % Monoethanolamin
6,0 % Polyamidoamin
6,0 % Sebacinsäure
4,0 % Isooctansäure
10,0 % Borsäure
5,0 % K-HDO
11,5 % H₂O
Gewichtsverhältnis Cu-HDO zu Cu-Verbindung wie 1:11
Anwendungskonzentration: 2,5 % in Wasser
Stabilität: Die Lösung in Wasser ist stabil
Pilzprüfung: mittlere Schutzmittelaufnahme 17,9 kg/m³
kein Angriff durch Coniophora puteana und Poria placenta
- Termitenprüfung:: mittlere Schutzmittelaufnahme 18,1 kg/m3
- Prüfzeitraum:: 4 Wochen
- Angriff:: kein Angriff
- überlebende Tiere:: 0

### Beispiel 3

17,5 % Cu (OH)₂ CuCO₃
42,5 % Monoethanolamin
10,0 % Sebacinsäure
12,5 % Borsäure
4,5 % K-HDO
13,0 % H₂O
Gewichtsverhältnis Cu-HDO zu Cu-Verbindung wie 1:12
Anwendungskonzentration: 2,5 % in Wasser
Stabilitt: Die Lösung in Wasser ist stabil
Pilzprüfung: mittlere Schutzmittelaufnahme: 18,1 kg/m³ kein Angriff durch Coniophora puteana und Poria placenta
- Termitenprüfung:: mittlere Schutzmittelaufnahme 18,0 kg/m³
- Prüfzeitraum:: 4 Wochen
- Angriff:: Nagespuren
- überlebende Tiere:: 0

### Beispiel 4

16,0 % Cu (OH)₂ CuCO ₃
5,0 % Bis-(N-C₅-C₈-Alkyldiazeniumdioxy)-Kupfer
42,0 % Ethanolamin
4,0 % Polyethylenimin n = ca 100
12,5 % Borsäure
10,0 % Sebacinsäure
10,5 % H₂O
Gewichtsverhältnis Cu-Alkyldiazoniumdioxy zu Cu-Verbindung wie 1:10
Anwendungskonzentration: 2,5 % in Wasser
Stabilität: Die Lösung in Wasser ist stabil
Pilzprüfung: mittlere Schutzmittelaufnahme: 17,8 kg/m³ kein Angriff durch Coniophora puteana und Poria placenta
- Termitenprüfung:: mittlere Schutzmittelaufnahme: 17,8 kg/m³
- Prüfzeitraum:: 3 Wochen
- Angriff:: Nagespuren
- überlebende Tiere:: 0

### Beispiel 5

16,0 % Cu(OH)₂ CuCO₃
4,5 % Cu-HDO
41,0 % Ethanolamin
6,0 % Polyamidoamin
10,0 % H₃BO₅
10,0 % Sebacinsäure
12,5 % H₂O
Gewichtsverhältnis Cu-HDO zu Cu-Verbindung wie 1:10
Anwendungskonzentration: 2,5 % in Wasser
Stabilität: Die Lösung in Wasser ist stabil
Pilzprüfung: mittlere Schutzmitelaufnahme 17,8 kg/m³ kein Angriff durch Coniophora puteana und Poria placenta
- Termitenprüfung:: mittlere Schutzmittelaufnahme 18,0 kg/m³
- Prüfzeitraum:: 4 Wochen
- Angriff:: eine kleine Nagespur
- überlebende Tiere:: 0

### Beispiel 6

16,5 % Cu(OH)₂ CuCO₃
40,0 % Ethanolamin
4,0 % Polyethylenimin n = ca. 150
10,0 % Sebacinsäure
5,0 % Phosphonopropionsäure
5,5 % K-HDO
19,0 % H₂O
Gewichtsverhältnis Cu-HDO zu Cu-Verbindung 1:9
- Anwendungskonzentration:: 2,5 % in Wasser
- Stabilität:: Die Lösung in Wasser ist stabil
- Termitenprüfung:: Mittlere Schutzmittelaufnahme 18,2 kg/m³
- Prüfzeitraum:: 4 Wochen
- Angriff:: Nagespuren
- Überlebende Tiere:: 0

### Beispiel 7

17,5 % Cu(OH)₂ CuCO₃
42,0 % Ethanolamin
5,0 % Polyethylenimin n = ca. 500
10,0 % Dodecandicarbonsäure
10,0 % Borsäure
5,0 % K-HDO
10,5 % H₂O
Gewichtsverhältnis Cu-HDO zu Cu-Verbindung 1:11 Anwendungskonzentration: 2,5 % in Wasser
- Stabilität:: Die Lösung in Wasser ist stabil
- Termitenprüfung:: Mittlere Schutzmittelaufnahme 18,1 kg/m³
- Prüfzeitraum:: 4 Wochen
- Angriff:: Nagespuren
- Überlebende Tiere:: 0

### Schutzmitteleindringung

Es wurde die Schutzmitteleindringung der erfindungsgemäßen Mischung durch einen Praxisversuch mit Kiefernpalisaden überprüft. Hierzu wurde eine Palisade (1 m Länge, Durchmesser 20 cm, Splintholzbereich mehr als 3 cm) im Kesseldruckverfahren (45 Min Vakuum: weniger als 90 % des normalen Luftdrucks und 3 Stunden Druck: 8 bar) mit einer 2,5 %igen Lösung imprägniert. Nach einer Fixierzeit von 4 Wochen wurden aus der Mitte der Palisaden Scheiben von 5 cm Dicke herausgeschnitten und aus diesen im äußeren Bereich ca. 2 cm dicke und ca. 2,5 cm breite Klötzchen herausgeschnitten, die Klötzchen repräsentieren Holz aus dem Eindringungsbereich 0 - 2 cm. Diese Klötzchen wurden einer Auswaschung unterworfen und dann gegenüber den Prüfpilzen Coniophora puteana und Poria placenta geprüft. Nach Abschluß dieser Prüfung waren die Prüfklötzchen zwar leicht von den Pilzen bewachsen, wurden jedoch nicht angegriffen, es konnte keine Holzzerstörung festgestellt werden.

## Patentansprüche

1. Wäßriges Holzschutzmittel auf der Basis einer Mischung von Alkanolamin und dem Kupfersalz eines N-Organodiazeniumdioxyds, enthaltend zusätzlich eine Kupferverbindung in einer solchen Menge, daß das Gewichtsverhältnis Kupfer im Kupfersalz des N-Organodiazeniumdioxyds zu Kupfer in der Kupferverbindung 1:3 bis 1:mehr als 3 beträgt.

2. Mittel gemäß Anspruch 1 enthaltend das Kupfersalz des N-Cyclohexyldiazeniumdioxyds.

3. Mittel gemäß Anspruch 1 enthaltend Monoethanolamin.

4. Mittel gemäß Anspruch 1 enthaltend Kupferhydroxycarbonat.

5. Verfahren zum Schutz von Holz, dadurch gekennzeichnet, daß man Holz mit einem Mittel gemäß Anspruch 1 behandelt.

6. Verfahren zum Schutz von Holz, dadurch gekennzeichnet, daß man Holz mit einer Mischung aus Wasser und einem Mittel gemäß Anspruch 1 behandelt.

7. Verwendung eines Mittels gemäß Anspruch 1 zum Schutz von Holz.

8. Verwendung einer Mischung aus Wasser und einem Mittel gemäß Anspruch 1 zum Schutz von Holz.

9. Mischung aus Wasser und einem Mittel gemäß Anspruch 1.

## Claims

1. An aqueous wood preservative based on a mixture of alkanolamine and the copper salt of an N-organodiazenium dioxide, additionally containing a copper compound in an amount such that the weight ratio of copper in the copper salt of the N-organodiazenium dioxide to copper in the copper compound is from 1 : 3 to 1 : more than 3.

2. A preservative as claimed in claim 1, containing the copper salt of N-cyclohexyldiazenium dioxide.

3. A preservative as claimed in claim 1, containing monoethanolamine.

4. A preservative as claimed in claim 1, containing basic copper carbonate.

5. A process for preserving wood, wherein wood is treated with a preservative as claimed in claim 1.

6. A process for preserving wood, wherein wood is treated with a mixture of water and a preservative as claimed in claim 1.

7. Use of a preservative as claimed in claim 1 for preserving wood.

8. Use of a mixture of water and a preservative as claimed in claim 1 for preserving wood.

9. A mixture of water and a preservative as claimed in claim 1.

## Revendications

1. Agent aqueux pour la protection du bois à base d'un mélange d'alcanolamine et du sel de cuivre d'un dioxyde de N-organodiazénium, contenant, additionnellement, un composé de cuivre en quantité telle que le rapport en poids du cuivre dans le sel de cuivre du dioxyde de N-organodiazénium et du cuivre dans le composé de cuivre varie entre 1/3 et 1>3.

2. Agent selon la revendication 1, contenant le sel de cuivre du dioxyde de N-cyclohexyldiazénium.

3. Agent selon la revendication 1, contenant de la monoéthanolamine.

4. Agent selon la revendication 1, contenant de l'hydroxycarbonate de cuivre.

5. Procédé de protection du bois, caractérisé par le fait que l'on traite le bois avec un agent selon la revendication 1.

6. Procédé de protection du bois, caractérisé par le fait que l'on traite le bois avec un mélange d'eau et d'un agent de protection selon la revendication 1.

7. Utilisation d'un agent selon la revendication 1 pour la protection du bois.

8. Utilisation d'un mélange d'eau et d'un agent selon la revendication 1 pour la protection du bois.

9. Mélange d'eau et d'un agent de protection selon la revendication 1.
